Europäisches Patentamt

(19) European Patent Office

Office européen des brevets

(11) Veröffentlichungsnummer: **0 215 330**
**B1**

(12) **EUROPÄISCHE PATENTSCHRIFT**

(45) Veröffentlichungstag der Patentschrifft:
17.01.90

(51) Int. Cl. ⁴: **F 01 K 23/06**, F 02 C 6/10

(21) Anmeldenummer: **86111587.1**

(22) Anmeldetag: **21.08.86**

(54) **Kombiniertes Gas- und Dampfturbinenkraftwerk.**

(30) Priorität: **02.09.85 DE 3531305**

(43) Veröffentlichungstag der Anmeldung:
**25.03.87 Patentblatt 87/13**

(45) Bekanntmachung des Hinweises auf die Patenterteilung:
**17.01.90 Patentblatt 90/03**

(84) Bennante Vertragsstaaten:
**AT BE CH DE FR GB IT LI LU NL SE**

(56) Entgegenhaltungen:
**DE-A-2 345 396**
**DE-A-2 429 993**
**DE-A-3 210 411**
**FR-A-2 256 954**

(73) Patentinhaber: **Siemens Aktiengesellschaft**
**Wittelsbacherplatz 2**
**D-8000 München 2 (DE)**

(72) Erfinder: **Schiffers, Ulrich, Dr.**
**Moritzbergstrasse 1**
**D-8501 Eckental (DE)**

## Beschreibung

Die Erfindung bezieht sich auf ein kombiniertes Gas- und Dampfturbinenkraftwerk mit einem Kohlevergaser, mit einer Kohlevorbereitungsanlage, mit einer Kohlemühle und einer Trocknungseinrichtung, mit einer dem Kohlevergaser vorgeschalteten Luftzerlegungsanlage, mit einer dem Kohlevergaser gasseitig nachgeschalteten Wärmetauscheranlage und Gasreinigungsanlage, mit einer zur Brennkammer der Gasturbine führenden Reingasleitung und einem an der Abgasleitung der Gasturbine angeschlossenen Abhitzekessel, bei dem die fühlbare Wärme des Abgases der Gasturbine zur Trocknung der gemahlenen Kohle herangezogen wird.

Durch die DE-OS-3 319 711 ist ein kombiniertes Gas- und Dampfturbinenkraftwerk bekannt, bei dem die Brennkammer der Gasturbine mit einem Reingas gespeist wird, das zuvor in einem dem Kraftwerk zugeordneten Kohlevergaser erzeugt wird. Dazu wird im Kohlevergaser einerseits gemahlene Kohle und andererseits Sauerstoff aus einer Luftzerlegungsanlage zugeführt. Die fühlbare Wärme des den Kohlevergaser verlassenden Rohgases wird über Wärmetauscherheizflächen sowohl zur Aufheizung des der Brennkammer der Gasturbine zuströmenden Reingases als auch zur Dampferzeugung verwendet. Der Stickstoff der Luftzerlegungsanlage wird dem der Brennkammer zuströmenden Reingas zugemischt, um die Stickoxidbildung durch Senkung der Flammtemperatur zu vermindern. Auch wird das Abgas der Gasturbine durch einen Abhitzedampferzeuger geleitet. Mit dem in diesen beiden Wärmetauschern erzeugten Dampf wird die Dampfturbine des Dampfturbinenkraftwerks gespeist.

Für den Betrieb von Kohlevergasern ist es bekannt, die Rohkohle vor der Einleitung in den Kohlevergaser zu mahlen und zu trocknen. Hierzu wird ein Teil des in dem Kohlevergaser erzeugten Reingases verbrannt und werden die Verbrennungsgase über die in den Fertigstaubbunker beförderte gemahlene Kohle geleitet. Eine solche Mahl-Trocknungsanlage verschlechtert jedoch den Nettowirkungsgrad der gesamten Kraftwerksanlage weil sie einen Teil des erzeugten Reingases verbraucht.

Zur Bereitstellung der Trocknungsenergie für die Kohle ist es aber auch schon bekannt, einen Teil der gemahlenen Kohle zu verbrennen und damit das in der Trocknungsanlage umlaufende Rückführgas aufzuheizen. Auch bei diesem Verfahren wird der Nettowirkungsgrad der gesamten Kraftwerksanlage verringert. Darüberhinaus wird bei dieser Art der Bereitstellung der Trocknungsenergie die Schwefelemission der Kraftwerksanlage erhöht.

Durch die DE-OS-2 345 396 ist es außerdem bekannt, das hinter dem Abhitzekessel noch warme Abgas der Gasturbine in die Kohletrocknungsanlage einzuleiten und zur Kohletrocknung heranzuziehen.

Der Erfindung liegt die Aufgabe zugrunde, die Trocknungsenergie für die Mahl-Trocknungsanlage in einer Weise bereitzustellen, die keine zusätzliche Schwefeldioxydemission erzeugt und darüberhinaus den Nettowirkungsgrad der gesamten Kraftwerksanlage so wenig wie möglich verschlechtert. Darüber hinaus sollte eine Brandgefahr ausgeschaltet werden.

Diese Aufgabe wird durch die Merkmale der Ansprüche 1 und 4 gelöst. Vorteilhafte Weiterbildungen sind in den Ansprüchen 2, 3 und 5 bis 13 beschrieben.

Infolge der Ausnutzung der fühlbaren Wärme des Abgases der Gasturbine zur Trocknung der Kohle wird eine Wärmequelle herangezogen, welche im kombinierten Gas- und Dampfturbinenkraftwerk ohnehin vorhanden ist. Außerdem wird so die Emission des Gas- und Dampfturbinenkraftswerks weder hinsichtlich ihrer Qualität noch hinsichtlich ihrer Quantität in irgendeiner Weise verändert. Dabei läßt sich Brandgefahr wirksam ausschalten, wenn die Kohle durch direkten Kontakt mit einem Gas getrocknet wird, welches keinen oder doch nur einen geringen Anteil an Sauerstoff enthält, indem der Mahl- und Trocknungsanlage als Heiz- und Trocknungsmedium Abgas der Gasturbine beigemischt ist, und in direkten Kontakt mit der Kohle gebracht wird.

Es hat sich als besonders zweckmäßig erwiesen, wenn in Ausgestaltung der Erfindung dem Gasturbinenabgas Stickstoff aus der Luftzerlegungsanlage beigemischt wird. Hierbei wird ein Gas verwendet, das ohnehin im Kraftwerk anfällt.

In zweckmäßiger Weiterbildung der Erfindung kann das Heizund Trocknungsmedium als sogenanntes Rückführgas durch die Mahl-Trocknungsanlage zirkulieren, wobei laufend mit Feuchtigkeit befrachtete Teilmengen abströmen und durch neues aufgeheiztes Heiz- und Trocknungsmedium substituiert werden. Durch eine solche Rückzirkulation des Heiz- und Trocknungsmediums läßt sich der Verbrauch desselben stark vermindern.

Entsprechend einer anderen besonders vorteilhaften Ausführungsform kann die Kohle durch direkten Kontakt mit einem Inertgas getrocknet werden, wobei das Inertgas als sogenanntes Rückführgas im Kreislauf durch einen vom Heizmedium durchströmten Wärmetauscher zur Mahl-Trocknungsanlag und wieder zurück durch den Wärmetauscher gefördert wird. Bei dieser Art der Wärmezufuhr läßt sich jeglicher Kontakt des Mahlgutes mit Sauerstoff und damit jede Teiloxydation vermeiden.

Dabei ist es besonders vorteilhaft, wenn als Trocknungsmedium ein Gemisch von Stickstoff und Wasserdampf verwendet wird.

Weitere Einzelheiten der Erfindung werden anhand zweier in den Figuren dargestellter Ausführungsbeispiele erläutert. Es zeigen:

Fig. 1 eine schematische Darstellung der Anordnung und gegenseitigen Verknüpfung der einzelnen Baugruppen des Gas- und Dampfturbinenkraftwerks mit der vorgeschalteten erfindungsgemäßen Kohlevorbereitungsanlage und

Fig. 2   eine Variante der Kohlevorbereitungsanlage Fig. 1.

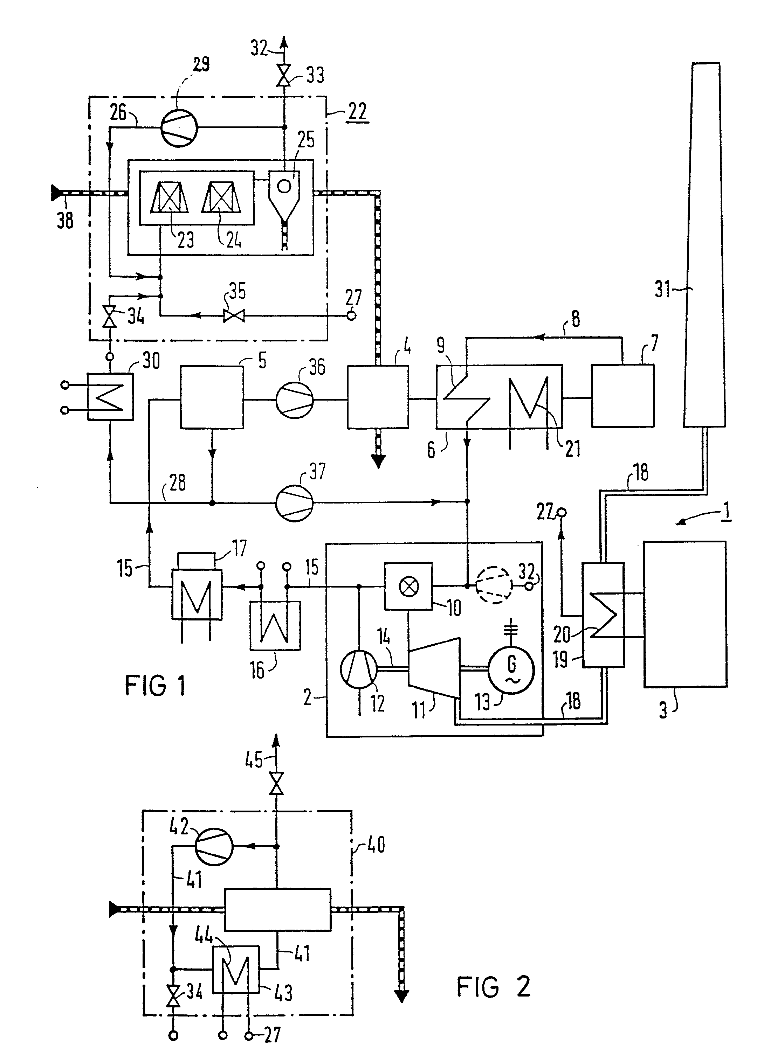

Wie die Fig. 1 zeigt, besteht das kombinierte Gas- und Dampfturbinenkraftwerk 1 im Wesentlichen aus einem Gasturbinenkraftwerksteil 2, einem Dampfturbinenkraftwerksteil 3, einen dem Gasturbinenkraftwerksteil 2 vorgeschalteten Kohlevergaser 4 mit einer dem Kohlevergaser vorgeschalteten Luftzerlegungsanlage 5, einer dem Kohlevergaser rohgasseitig nachgeschalteten Wärmetauscheranlage 6 und einer dem der Wärmetauscheranlage rohgasseitig nachgeschalteten Gasreinigungsanlage 7. Die die Gasreinigungsanlage 7 verlassende Reingasleitung 8 ist über einen Rohgas-Reingas-Wärmetauscher 9 der Wärmetauscheranlage geführt und an der Brennkammer 10 der Gasturbine 11 angeschlossen. Ein Luftverdichter 12 und einer Generator 13 sind mit der Welle 14 der Gasturbine 11 gekuppelt. Die an den Luftverdichter 12 angeschlossene Luftleitung 15 führt sowohl zur Brennkammer 10 der Gasturbine als auch über einen Wärmetauscher 16 und einem Kühler 17 zum Eingang der Luftzerlegungsanlage 5. Die Abgasleitung 18 der Gasturbine 11 führt durch einen Abhitzekessel 19. Die Dampferzeugerheizflächen 20, 21 sowohl des Abhitzekessels 19 als auch der Wärmetauscheranlage 6 sind mit dem hier nur angedeuteten Dampfturbinenkraftwerksteil 3 verbunden.

Dem Kohlevergaser ist brennstoffseitig eine Mahl-Trocknungsanlage 22 vorgeschaltet. Diese Mahl-Trocknungsanlage die mehrere Kohlemühlen 23, 24, einen Gasentstauber 25 und ein Fertigstaubbunker (nicht dargestellt) enthält, wird von einem im Kreis geführten Trocknungsmedium dem sogenannten Rückführgas durchströmt. Dessen Rezirkulationsleitung 26 ist über eine Anschlußleitung 27 sowohl an die Abgasleitung 18 der Gasturbine 11 als auch an die Stickstoffleitung 28 der Luftzerlegungsanlage 5 angeschlossen. Sie enthält einen Kreislaufverdichter 29 für die Umwälzung des Trocknungsmediums. In der zur Rezirkulationsleitung 26 führenden Stickstoffleitung 28 ist ein von einem Heizmedium durchströmter Wärmetauscher 30 eingebaut. Das diesen Wärmetauscher 30 durchströmende Heizmedium kann vor dem Rohgas-Reingas-Wärmetauscher abgezweigtes Rohgas oder hinter dem Luftverdichter 12 entnommene und zur Luftzerlegungsanlage 5 strömende verdichtete Luft sein. In Strömungsrichtung des Trocknungsmediums hinter der Mahl-Trocknungsanlage enthält die Rezirkulationsleitung 26 einen zum Kamin 31 führenden Gasablaß 32. Sowohl im Gasablaß 32 als auch in der Stickstoffleitung 28 und in der Anschlußleitung 27 zur Abgasleitung 18 der Gasturbine 11 sind je ein Regelventil 33, 34, 35 eingebaut.

Beim Betrieb dieses Gas- und Dampfturbinenkraftwerks 1 wird durch den auf der Welle 14 der Gasturbine 11 sitzenden Luftverdichter 12 Luft in die Brennkammer 10 und in die zur Luftzerlegungsanlage 5 führende Luftleitung 15 gefördert. Der in der Luftzerlegungsanlage erzeugte Sauerstoff wird über einen Sauerstoffverdichter 36 auf das Druckniveau des mit Überdruck betriebenen Kohlevergasers 4 angehoben und dem Kohlevergaser zugeführt. Das den Kohlevergaser verlassende Rohgas durchströmt die Wärmetauscheranlage 6. In diesem gibt das Rohgas seine Wärme sowohl an Dampferzeugerheizflachen 21 als auch an den Rohgas-Reingas-Wärmetauscher 9 ab. Das die Wärmetauscheranlage 6 verlassende weitgehend abgekühlte Rohgas wird in der Gasreinigungsanlage 7 sowohl von staubförmigen Verunreinigungen als auch von Kohlendioxyd, Schwefeldioxyd und Halogenverbindungen befreit. Es gelangt als Reingas in den Rohgas-Reingas-Wärmetauscher 9 von dem es wieder aufgeheizt in die Brennkammer 10 der Gasturbine 11 strömt. Zur Verminderung der NO$_X$-Bildung wird diesem Reingas Stickstoff aus der Luftzerlegungsanlage 5 über einen Stickstoffverdichter 37 zugemischt. Das Abgas der Gasturbine gibt seine fühlbare Wärme im Abhitzekessel 19 an Dampferzeugerheizflächen 20 ab und gelangt mit einer Temperatur von 100 bis 180° in den Kamin 31.

Über die Kohlezuführleitung 38 gelangt Rohkohle in die Mahl-Trocknungsanlage 22 und wird dort in hier nicht weiter dargestellter Weise in den Kohlemühlen 23, 24 vermahlen und mittels des Trocknungsmediums - im Ausführungsbeispiel ein Gemisch von Stickstoff und Abgas der Gasturbine - über den Entstauber 25 in den hier nicht weiter dargestellten Fertigstaubbunker der Mahl-Trocknungsanlage befördert. Vom Fertigstaubbunker wird die feingemahlene und getrocknete Kohle entsprechend dem Verbrauch dem Kohlevergaser 4 zugeleitet. Die Mahl-Trocknungsanlage 22 wird von dem vorgenannten heißen Trocknungsmedium durchströmt. Dieses Trocknungsmedium wird über die Anschlußleitung 27 an die Abgasleitung 18 der Gasturbine durch fortlaufende Zumischung von heißem Gasturbinenabgas aufgeheizt. Um den relativ hohen Sauerstoffgehalt des Gasturbinenabgases deutlich unter 10 Volumenprozent zu senken, wird dem Gasturbinenabgas ständig etwas im Wärmetauscher 30 vorerhitzter Stickstoff aus der Luftzerlegungsanlage 15 zugemischt. Ein Teil des die Mahl-Trocknungsanlage 22 verlassenden überschüssigen mit Feuchtigkeit angereicherten Trocknungsmediums wird ständig über den Gasablaß 32 in die Atmosphäre bzw. den Kamin 31 entlassen. Über die Regelventile 33, 34, 35 kann der Durchsatz des Trocknungsmediums der Feuchtigkeit der Kohle angepaßt werden.

Es ist ein großer Vorteil dieses kombinierten Gases- und Dampfturbinenkraftwerks 1, daß für die Bereitstellung der Trocknungsenergie keine zusätzliche Verbrennung erforderlich wird und somit auch keine zusätzliche Emission entsteht. Dadurch kann die Mahl-Trocknungsanlage 22 völlig emissionsneutral betrieben werden. Darüberhinaus wird zur Bereitstellung der Trocknungsenergie weder Kohle noch Reingas verbrannt - beides Maßnahmen die den Nettowirkungsgrad des Gas- und Dampfturbinenkraftwerks verringern würden - sondern wird die restliche Wärme eines Teils des Abgases der Gasturbine ausgenutzt.

Die Fig. 2 zeigt eine andere Mahl-Trocknungsanlage 40, die anstelle der in der Fig. 1 dargestellten Mahl-Trocknungsanlage 22 an das im Übrigen unveränderte Gas- und Dampfturbinenkraftwerk 1 der Fig. 1 anschließbar ist. Bei dieser Mahl-Trocknungsanlage 40 besteht das Trocknungsmedium aus reinem Stickstoff, der von der Luftzerlegungsanlage 5 in die Rezirkulationsleitung 41 eingespeist wird. Außerdem ist in diese Rezirkulationsleitung, außer dem Kreislaufverdichter 42, ein Wärmetauscher 43 eingeschaltet, dessen Wärmetauscherheizfläche 44 entweder von Gasturbinenabgas oder von zur Luftzerlegungsanlage 5 strömender und durch die Verdichtung aufgeheizte Luft, oder von Mitteldruckdampf durchströmt wird. Bei dieser Ausführungsvariante der Mahl-Trocknungsanlage kommt das Mahlgut mit keinem Sauerstoff in Berührung und besteht das Trocknungsmedium im Wesentlichen aus Stickstoff und Wasserdampf.

Auch in diesem letztgenannten Fall wird die Trocknungsenergie in einer Weise bereitgestellt, die emissionsneutral ist. Bei der Zuführung von Gasturbinenabgas oder von endverdichteter Luft in den Wärmetauscher 43 wird auch der Nettowirkungsgrad des Kraftwerkes nicht beeinträchtigt. Lediglich beim Anschluß des Wärmetauscher 43 an eine Mitteldruckdampfanzapfung wäre mit einer geringfügigen Verschlechterung des Nettowirkungsgrades des Kraftwerkes zu rechnen. Diese letztgenannte Lösung hätte jedoch den Vorteil, daß die Heizleistung wesentlich gesteigert werden kann wenn sehr feuchte Kohle getrocknet werden muß. Es wäre auch möglich, bei der Verwertung von sehr feuchter Kohle oder sonstiger feuchter Brennstoffe die erhöhte Trocknungsenergie durch zusätzliche Verbrennung von Reingas oder Kohle mit den eingangs geschilderten Nachteilen zu steigern.

Statt das feuchte Trocknungsmedium über den Gasablaß 32 oder 45 in die Atmosphäre zu entlassen, könnte es auch verdichtet und dann dem zur Brennkammer 10 der Gasturbine 11 strömenden Brenngas beigemischt werden.

**Bezugszeichenliste**

| | |
|---|---|
| Gas- und Dampfturbinenkraftwerk | 1 |
| Gasturbinenkraftwerksteil | 2 |
| Dampfturbinenkraftwerksteil | 3 |
| Kohlevergaser | 4 |
| Luftzerlegungsanlage | 5 |
| Wärmetauscheranlage | 6 |
| Gasreinigungsanlage | 7 |
| Reingasleitung | 8 |
| Rohgas-Reingas-Wärmetauscher | 9 |
| Brennkammer | 10 |
| Gasturbine | 11 |
| Luftverdichter | 12 |
| Generator | 13 |
| Welle | 14 |
| Luftleitung | 15 |
| Wärmetauscher | 16 |
| Kühler | 17 |
| Abgasleitung | 18 |
| Abhitzekessel | 19 |
| Dampferzeugerheizfläche | 20, 21 |
| Mahl-Trocknungsanlage | 22 |
| Kohlemühle | 23, 24 |
| Gasentstauber | 25 |
| Rezirkulationsleitung | 26 |
| Anschlußleitung | 27 |
| Stickstoffleitung | 28 |
| Kreislaufverdichter | 29 |
| Wärmetauscher | 30 |
| Kamin | 31 |
| Gasablaß | 32 |
| Regelventil | 33, 34, 35 |
| Sauerstoffverdichter | 36 |
| Stickstoffverdichter | 37 |
| Kohlezuführungsleitung | 38 |
| Mahl-Trocknungsanlage | 40 |
| Rezirkulationsleitung | 41 |
| Kreislaufverdichter | 42 |
| Wärmetauscher | 43 |
| Wärmetauscherheizfläche | 44 |
| Gasablaß | 45 |

**Patentansprüche**

1. Kombiniertes Gas- und Dampfturbinenkraftwerk mit einem Kohlevergaser (4), mit einer Kohlevorbereitungsanlage, mit einer Kohlemühle (23, 24) und einer Kohletrocknungseinrichtung, mit einer dem Kohlevergaser vorgeschalteten Luftzerlegungsanlage (5), mit einer dem Kohlevergaser gasseitig nachgeschalteten Wärmetauscheranlage (6) und Gasreinigungsanlage (7), mit einer zur Brennkammer (10) der Gasturbine (11) führenden Reingasleitung (8) und einem an der Abgasleitung (18) der Gasturbine angeschlossenen Abhitzekessel (19), bei dem die fühlbare Wärme des Abgases der Gasturbine (11) zur Trocknung der gemahlenen Kohle herangezogen wird, *dadurch gekennzeichnet*, daß die Kohle durch direkten Kontakt mit einem Gas getrocknet wird, welches keinen oder nur einen geringen Anteil an Sauerstoff enthält, indem der Mahl-Trocknungsanlage (22) als Heiz- und Trocknungsmedium Abgas der Gasturbine (11), dem Inertgas beigemischt ist, zugeführt und in direkten Kontakt mit der Kohle gebracht wird.

2. Kombiniertes Gas- und Dampfturbinenkraftwerk nach Anspruch 1, *dadurch gekennzeichnet*, daß dem Gasturbinenabgas Stickstoff aus der Luftzerlegungsanlage (5) beimischbar ist.

3. Kombiniertes Gas- und Dampfturbinenkraftwerk nach Anspruch 1 oder 2, *dadurch gekennzeichnet*, daß das Heiz- und Trocknungsmedium als sogenanntes Rückführgas durch die Mahl-Trocknungsanlage (22, 40) zirkuliert, wobei laufend mit Feuchtigkeit befrachtete Teilmengen abströmen und durch neues aufgeheiztes Heiz- und Trocknungsmedium substituiert werden.

4. Kombiniertes Gas- und Dampfturbinenkraftwerk mit einem Kohlevergaser (4), mit einer Kohlevorbereitungsanlage, mit einer Kohlemühle (23, 24) und einer Kohletrocknungseinrichtung, mit einer dem Kohlevergaser vorgeschalteten Luftzerlegungsanlage (5), mit einer dem Kohlevergaser gasseitig nachgeschalteten Wärmetauscheranlage (6) und Gasreinigungsanlage (7), mit einer zur Brennkammer (10) der Gasturbine (11) führenden Reingasleitung (8) und einem an der Abgasleitung (18) der Gasturbine angeschlossenen Abhitzekessel (19), bei dem die fühlbare Wärme des Abgases der Gasturbine (11) zur Trocknung der gemahlenen Kohle herangezogen wird, *dadurch gekennzeichnet*, daß die Kohle durch direkten Kontakt mit einem Inertgas getrocknet wird, wobei das Inertgas als sogenanntes Rückführgas im Kreislauf durch einen von einem Heizmedium durchströmten Wärmetauscher (43) zur Mahl-Trocknungsanlage (40) und wieder zurück durch den Wärmetauscher befördert wird.

5. Kombiniertes Gas- und Dampfturbinenkraftwerk nach Anspruch 4, *dadurch gekennzeichnet*, daß das Rückführgas durch ein Gemisch von Stickstoff und Wasserdampf gebildet wird.

6. Kombiniertes Gas- und Dampfturbinenkraftwerk nach Anspruch 4 oder 5, *dadurch gekennzeichnet*, daß brüdenartige Restgasmengen vor dem Wärmetauscher (43) abziehbar und durch neues Inertgas substituierbar sind.

7. Kombiniertes Gas- und Dampfturbinenkraftwerk nach Anspruch 2 oder 5, *dadurch gekennzeichnet*, daß der dem Trocknungsmedium beizumischende Stickstoff in einem Wärmetauscher (30) aufheizbar ist, der von der zur Luftzerlegungsanlage (5) strömenden endverdichteten Luft durchströmt wird.

8. Kombiniertes Gas- und Dampfturbinenkraftwerk nach Anspruch 3 oder 4, *dadurch gekennzeichnet*, daß das Rückführgas durch zusätzliches Verbrennen eines Teiles des Reingases aufheizbar ist.

9. Kombiniertes Gas- und Dampfturbinenkraftwerk nach Anspruch 8, *dadurch gekennzeichnet*, daß die heißen Verbrennungsgase des Reingases dem Rückführgas unmittelbar beimischbar sind.

10. Kombiniertes Gas- und Dampfturbinenkraftwerk nach Anspruch 4, *dadurch gekennzeichnet*, daß der Wärmetauscher (43) vom Abgas der Gasturbine durchströmt wird.

11. Kombiniertes Gas- und Dampfturbinenkraftwerk nach Anspruch 4, *dadurch gekennzeichnet*, daß der Wärmetauscher (16) von endverdichteter, der Luftzerlegungsanlage (5) zuströmenden Luft durchströmt wird.

12. Kombiniertes Gas- und Dampfturbinenkraftwerk nach Anspruch 4, *dadurch gekennzeichnet*, daß der Wärmetauscher (43) von Mitteldruckdampf durchströmt wird.

13. Kombiniertes Gas- und Dampfturbinenkraftwerk nach Anspruch 3 oder 6, *dadurch gekennzeichnet*, daß die abströmenden, mit Feuchtigkeit befrachteten Teilmengen des Trocknungsmediums über-einen Verdichter in die Brenngasleitung (8) der Gasturbine (11) einspeisbar sind.

## Claims

1. Combined gas and steam turbine power station with a coal gasifier (4), with a coal preparation plant, with a coal mill (23, 24) and a coal drying device, with an air separation plant (5) connected upstream to the coal gasifier, with a heat exchanger plant (6) and gas purification plant (7) connected downstream to the coal gasifier on the gas side, with a pure gas line (8) leading to the combustion chamber (10) of the gas turbine (11) and a waste heat boiler (19) connected to the waste gas line (18) of the gas turbine, in which the sensible heat of the waste gas of the gas turbine (11) is drawn upon for drying the milled coal, characterised in that the coal is dried by direct contact with a gas which contains no oxygen or only a small proportion of oxygen, while waste gas of the gas turbine (11), to which the inert gas is added by mixing, is supplied as heating and drying medium to the milling-drying plant (22) and is brought into direct contact with the coal.

2. Combined gas and steam turbine power station according to claim 1, characterised in that nitrogen from the air separation plant (5) can be added to the gas turbine waste gas by mixing.

3. Combined gas and steam turbine power station according to claim 1 or 2, characterised in that the heating and drying medium as a so-called return gas circulates through the milling-drying plant (22, 40), in which case partial quantities laden with moisture continuously flow away and are replaced by new heated-up heating and drying medium.

4. Combined gas and steam turbine power station with a coal gasifier (4), with a coal preparation plant, with a coal mill (23, 24) and a coal drying device, with an air separation plant (5) connected upstream to the coal gasifier, with a heat exchanger plant (6) and gas purification plant (7) connected downstream to the coal gasifier on the gas side, with a pure gas line (8) leading to the combustion chamber (10) of the gas turbine (11) and a waste heat boiler (19) connected to the waste gas line (18) of the gas turbine, in which the sensible heat of the waste gas of the gas turbine (11) is drawn upon for drying the milled coal, characterised in that the coal is dried by direct contact with an inert gas, the so-called return gas being conveyed in circulation by way of a heat exchanger (43), through which a heating medium flows, to the milling-drying plant (10) and back again by way of the heat exchanger.

5. Combined gas and steam turbine power station according to claim 4, characterised in that the return gas is formed by a mixture of nitrogen and water vapour.

6. Combined gas and steam turbine power station according to claim 4 or 5, characterised in that exhaust vapour-like leftover quantities of gas can be drawn off before the heat exchanger (43) and replaced by new inert gas.

7. Combined gas and steam turbine power station according to claim 2 or 5, characterised in that the nitrogen to be added to the drying medium by mixing can be heated up in a heat exchanger (30) through which the finally compressed air flowing to the air separation plant (5) flows.

8. Combined gas and steam turbine power station according to claim 3 or 4, characterised in that the return gas can be heated up through additional combustion of a part of the pure gas.

9. Combined gas and steam turbine power station according to claim 8, characterised in that the hot combustion gases of the pure gas can be added by mixing directly to the return gas.

10. Combined gas and steam turbine power station according to claim 4, characterised in that the waste gas of the gas turbine flows through the heat exchanger (43).

11. Combined gas and steam turbine power station according to claim 4, characterised in that finally compressed air flowing to the air separation plant (5) flows through the heat exchanger (16).

12. Combined gas and steam turbine power station according to claim 4, characterised in that medium pressure steam flows through the heat exchanger (43).

13. Combined gas and steam turbine power station according to claim 3 or 6, characterised in that the partial quantities of the drying medium flowing away, laden with moisture, can be fed by way of a compressor into the fuel gas line (8) of the gas turbine (11).

## Revendications

1. Centrale électrique combinée à turbine à gaz et à turbine à vapeur, comprenant un gazogène à charbon (4), une installation de préparation du charbon, un broyeur de charbon (23, 24) et un dispositif de séchage du charbon, une installation de fractionnement de l'air (5) montée en amont du gazogène à charbon, une installation à échangeur de chaleur (6) et une installation d'épuration du gaz (7), montées en aval, côté gaz, du gazogène à charbon, un conduit pour le gaz épuré (8) menant à la chambre de combustion (10) de la turbine à gaz (11) et une chaudière de récupération de la chaleur (19) reliée au conduit pour le gaz d'échappement (18) de la turbine à gaz, dans laquelle on utilise la chaleur sensible du gaz d'échappement de la turbine à gaz (11) pour sécher le charbon broyé, caractérisée en ce que le charbon est séché par contact direct avec un gaz qui ne contient pas d'oxygène ou qui n'en contient qu'une faible proportion, en envoyant à l'installation de broyage-séchage (22), comme milieu de chauffage et de séchage, du gaz d'échappement de la turbine à gaz (11) auquel on mélange du gaz inerte et en le mettant directement en contact avec le charbon.

2. Centrale électrique combinée à turbine à gaz et à turbine à vapeur, suivant la revendication 1, caractérisée en ce que de l'azote provenant de l'installation de fractionnement de l'air (5) est susceptible d'être mélangé au gaz d'échappement de la turbine à gaz.

3. Centrale électrique combinée à turbine à gaz et à turbine à vapeur, suivant la revendication 1 ou 2, caractérisée en ce que le milieu de chauffage et de séchage circule, à titre de ce que l'on appelle du gaz de recyclage, dans l'installation de broyage-séchage (22, 40), des quantités partielles chargées d'humidité étant évacuées en permanence et étant remplacées par du milieu de chauffage et de séchage frais chauffé.

4. Centrale électrique combinée à turbine à gaz et à turbine à vapeur, comprenant un gazogène à charbon (4), une installation de préparation du charbon, un broyeur de charbon (23, 24) et un dispositif de séchage du charbon, une installation de fractionnement de l'air (5) montée en amont du gazogène à charbon, une installation à échangeur de chaleur (6) et une installation d'épuration du gaz (7), montée en aval, côté gaz, du gazogène à charbon, un conduit pour le gaz épuré (8) menant à la chambre de combustion (10) de la turbine à gaz (11) et une chaudière de récupération de la chaleur (19) reliée au conduit pour le gaz d'échappement (18) de la turbine à gaz, dans laquelle on utilise la chaleur sensible du gaz d'échappement de la turbine à gaz (11) pour sécher le charbon broyé, caractérisée en ce que le charbon est séché par contact direct avec un gaz inerte, le gaz inerte, sous forme de ce que l'on appelle du gaz de recyclage, étant envoyé en circuit fermé à l'installation de broyage-séchage (40) en passant par un échangeur de chaleur (43) parcouru par un milieu de chauffage et étant ramené en passant par l'échangeur de chaleur.

5. Centrale électrique combinée à turbine à gaz et à turbine à vapeur, suivant la revendication 4, caractérisée en ce que le gaz de recyclage est formé d'un mélange d'azote et de vapeur d'eau.

6. Centrale électrique combinée à turbine à gaz et à turbine à vapeur, suivant la revendication 4 ou 5, caractérisée en ce que des quantités résiduelles de gaz sous forme de buée, peuvent être soutirées en amont de l'échangeur de chaleur (43) et être remplacées par du gaz inerte frais.

7. Centrale électrique combinée à turbine à gaz et à turbine à vapeur, suivant la revendication 2 ou 5, caractérisée en ce que l'azote, à mélanger au milieu de séchage, peut être chauffé dans un échangeur de chaleur (30) dans lequel passe l'air dont la compression est achevée et qui va à l'installation de fractionnement de l'air (5).

8. Centrale électrique combinée à turbine à gaz et à turbine à vapeur, suivant la revendication 3 ou 4, caractérisée en ce que le gaz de recyclage peut être chauffé par combustion supplémentaire d'une partie du gaz épuré.

9. Centrale électrique combinée à turbine à gaz et à turbine à vapeur, suivant la revendication 8, caractérisée en ce que les gaz de combustion chauds du gaz épuré peuvent être mélangés directement au gaz de recyclage.

10. Centrale électrique combinée à turbine à gaz et à turbine à vapeur, suivant la revendication 4, caractérisée en ce que le gaz d'échappement de la turbine à gaz passe par l'échangeur de chaleur (43).

11. Centrale électrique combinée à turbine à gaz et à turbine à vapeur, suivant la revendication 4, caractérisée en ce que l'air, dont la compression est achevée et qui va à l'installation de fractionnement de l'air, passe dans l'échangeur de chaleur (16).

12. Centrale électrique combinée à turbine à gaz et à turbine à vapeur, suivant la revendication 4, caractérisée en ce que de la vapeur à moyenne pression passe dans l'échangeur de chaleur (43).

13. Centrale électrique combinée à turbine à gaz et à turbine à vapeur, suivant la revendication 3 ou 6, caractérisée en ce que les quantités partielles du milieu de séchage, qui sont évacuées et qui sont chargées d'humidité, peuvent être envoyées, en passant par un compresseur, au conduit pour le gaz de combustion de la turbine à gaz (11).

FIG 1

FIG 2